# FASCICULE DE BREVET EUROPEEN

(11) **EP 1 793 644 B1**
(45) Date de publication et mention de la délivrance du brevet: **13.01.2010**
(21) Numéro de dépôt: 06301129.0
(22) Date de dépôt: 07.11.2006
(51) Int. Cl.: H04Q 11/00

(54) **Dispositif de communication optique pour un noeud transparent adapté à l'égalisation spectrale**
Optische Kommunikationseinrichtung für einen transparenten Knoten mit spektraler Entzerrungsfähigkeit
Optical communication device for a transparent node with spectral equalisation capability

(30) Priorité: 30.11.2005 FR 0553631
(43) Date de publication de la demande: 06.06.2007
(73) Titulaire: Alcatel Lucent, 75008 Paris (FR)
(72) Inventeur: Peloso, Pierre, 91460 Marcoussis (FR); Le Sauze, Nicolas, 91440 Bures-sur-Yvette (FR); ROFIDAL Olivia, 91440 Bure sur Yvette (FR)
(74) Mandataire: Thibaud, Jean-Baptiste

(56) Documents cités:
- EP-A- 1 111 953
- US-A- 5 726 788
- US-B1- 6 331 906

## Description

L'invention concerne les réseaux optiques transparents, et plus précisément les dispositifs de commutation optique utilisés dans les noeuds de commutation transparents de tels réseaux.

On entend ici par « réseau optique transparent » un réseau dans lequel tous les noeuds de commutation optique sont de type transparent de sorte que les canaux de longueurs d'onde, qui contiennent les signaux à transmettre, demeurent constamment dans le domaine optique.

Par ailleurs, on entend ici par « noeud de commutation transparent » un équipement de réseau comportant au moins un dispositif de commutation optique, de type transparent, chargé d'aiguiller des canaux de longueurs d'onde multiplexés ou à multiplexer, en provenance de lignes optiques amont et destinés à des lignes optiques aval, sans qu'ils fassent l'objet d'une conversion optique/électrique/optique.

Comme le sait l'homme de l'art, les opérateurs de réseaux optiques transparents utilisent des noeuds de commutation dont le degré de commutation ne cesse de croître. Il est rappelé que le degré de commutation d'un noeud est le nombre de noeuds distants auxquels ce noeud peut être connecté ou plus exactement le nombre de fibres arrivant au noeud lorsque plusieurs fibres relient deux noeuds. Ce degré dépend du nombre et du type de modules de diffusion ou de modules de fusion que comporte un dispositif de commutation optique implanté dans un noeud de commutation. Par exemple, un noeud de degré 4 peut être constitué à partir de quatre modules de diffusion de type 1x3 couplés à 4 modules de fusion de type 3x1.

On entend ici par « module de diffusion » un équipement chargé d'aiguiller des canaux optiques multiplexés qu'il reçoit sur son entrée en fonction de leurs longueurs d'onde respectives vers une ou plusieurs de ses sorties. En d'autres termes, un module de diffusion assure une fonction de « routage interne » au moins partiel qui lui permet de délivrer sur chacune de ses sorties un ou plusieurs canaux optiques (voir même tous) d'un multiplex qu'il a reçu sur son entrée. Il s'agit par exemple d'un module de diffusion non sélective, tel qu'un coupleur (ou « optical splitter »), ou d'un module de diffusion sélective, tel qu'un module de sélection de longueurs d'onde de type WSS (pour « Wavelength Selective Switch »). Dans ce dernier cas, l'aiguillage des différents canaux optiques sur des sorties (chaque canal reçu ne pouvant être distribué que sur une unique sortie) est effectué en fonction d'une commande spécifique. Les modules WSS sont notamment décrits dans le document de T. Ducellier et al. « The MWS 1x4 : A High Performance Wavelength Switching Building Block », Conférence ECOC'2002, Copenhague, 9 septembre 2002, 2.3.1.

Par ailleurs, on entend ici par « module de fusion » un équipement chargé de multiplexer (ou aiguiller en interne) les canaux optiques qu'il reçoit respectivement sur ses entrées afin de délivrer un canal optique ou un multiplex de canaux optiques sur sa sortie. En d'autres termes, un module de fusion assure une fonction de multiplexage (éventuellement programmable) permettant de fournir sur son unique sortie soit un canal optique sélectionné parmi les canaux optiques reçus sur ses entrées, soit un multiplex constitué d'un ensemble de canaux optiques sélectionnés parmi les canaux optiques reçus sur ses entrées. Il s'agit par exemple d'un module de fusion non sélective, tel qu'un coupleur optique (ou « optical coupler »), ou d'un module de fusion sélective, tel qu'un module de sélection de longueurs d'onde de type WSS.

On sait aujourd'hui réaliser des noeuds de commutation de degré 3 ou 4. De tels noeuds comportent des dispositifs de commutation optique comprenant, par exemple :
- un premier étage comportant 3 ou 4 modules de diffusion munis chacun d'une première entrée, destinée à être couplée à une ligne optique amont (dédiée au transport de canaux de longueurs d'onde différentes multiplexés), et au moins 3 ou 4 premières sorties, propres chacune à délivrer au moins l'un des canaux multiplexés reçus par la première entrée,
- ii) un deuxième étage comportant 3 ou 4 modules de fusion comprenant chacun au moins 3 ou 4 deuxièmes entrées, propres à recevoir chacune au moins un canal d'une longueur d'onde, et une deuxième sortie destinée à être couplée à une ligne optique aval (dédiée au transport de canaux de longueurs d'onde différentes multiplexés) et propre à délivrer au moins un canal reçu sur l'une des deuxièmes entrées, et
- un troisième étage comportant des liens optiques couplant respectivement les premières sorties aux deuxièmes entrées.

Un tel dispositif de commutation optique est notamment décrit dans le document brevet US 2002/0197000 A1.

Pour obtenir des noeuds de degré de commutation supérieur à 4, au moins deux solutions ont été proposées.

Une première solution consiste à coupler électriquement, via une matrice de commutation électrique, des noeuds de faible degré de commutation, par exemple deux noeuds de degré 3 ou 4. Mais, cela augmente notablement le coût de la structure résultante, du fait que cela augmente à la fois le nombre d'interfaces électriques (modules d'extraction (Rx) et modules d'insertion (Tx)), la taille de la matrice de commutation électrique et la taille de l'étage de sélection spectrale pour les insertions et les extractions (étant donné que l'interface entre les deux noeuds est traitée comme une interface d'extraction dans un noeud et comme une interface d'insertion dans l'autre noeud).

Une seconde solution consiste à reprendre l'architecture du dispositif de commutation optique présenté ci-avant, en utilisant un plus grand nombre de modules de diffusion de type 1x9 (au lieu de 1x4) et un plus grand nombre de modules de fusion de type 9x1 (au lieu de 4x1). Malheureusement, lorsque l'on utilise les modules de fusion WSS de type 9x1 (ou les modules de diffusion WSS de type 1x9) pour effectuer une égalisation spectrale par atténuation de la puissance optique de certains canaux, leurs cinq entrées (ou sorties) les plus excentrées induisent des défauts de platitude spectrale lors du filtrage (parfois appelés « side lobes ») si on leur applique une atténuation.

Aucune solution connue n'apportant une entière satisfaction, l'invention a donc pour but d'améliorer la situation.

Elle propose à cet effet un dispositif de commutation optique, pour un noeud de commutation d'un réseau optique transparent, comportant :
- au moins des première et seconde matrices de commutation comprenant chacune :
   ➢ un premier étage comportant Nᵢ modules de diffusion munis chacun d'une première entrée, destinée à être couplée à une ligne optique amont dédiée au transport de canaux multiplexés et de Mᵢ premières sorties, avec « i » indice désignant chaque matrice, Nᵢ entier supérieur ou égal à deux et Mᵢ entier supérieur à Nᵢ, et
   ➢ un deuxième étage comportant i) Nᵢ modules de fusion comprenant chacun Nᵢ deuxièmes entrées couplées chacune à l'une des Mᵢ premières sorties de l'un des Nᵢ modules de diffusion via un lien optique, au moins une troisième entrée, et une deuxième sortie destinée à être couplée à une ligne optique aval dédiée au transport de canaux multiplexés,
- le second étage de l'une au moins des matrices de commutation comprenant au moins un module de fusion additionnel comportant Nᵢ deuxièmes entrées et une deuxième sortie,
- certaines au moins des premières sorties ou les deuxièmes entrées (des modules de fusion et module(s) de fusion additionnel(s)) étant adaptées à l'ajustement de puissance optique,
- au moins un lien optique couplant la deuxième sortie d'un module de fusion additionnel de l'une des matrices de commutation à une troisième entrée de chacun des Nᵢ modules de fusion de l'autre matrice de commutation.

Le dispositif selon l'invention peut comporter d'autres caractéristiques qui peuvent être prises séparément ou en combinaison, et notamment :
- chaque premier étage peut comprendre au moins un module de diffusion additionnel muni d'une quatrième entrée, raccordée à un lien optique de manière à être couplée à la deuxième sortie d'un module de fusion appartenant à une matrice de commutation différente de la sienne, et de Nᵢ premières sorties, couplées chacune à une troisième entrée de chaque module de fusion de sa propre matrice de commutation ;
- le second étage de chaque matrice de commutation peut comprendre au moins un module de fusion additionnel comprenant Nᵢ deuxièmes entrées, éventuellement adaptées à l'ajustement de puissance optique, et une deuxième sortie ;
- le premier étage de chaque matrice de commutation comprend au moins un module de diffusion additionnel comprenant une quatrième entrée et Nᵢ premières sorties, éventuellement adaptées à l'ajustement de puissance optique ;
- chaque premier étage peut comprendre au moins deux modules de diffusion additionnels et chaque deuxième étage peut comprendre au moins deux modules de fusion additionnels. Dans ce cas, le dispositif de commutation optique comprend au moins quatre liens optiques couplant chacun la deuxième sortie de l'un des modules de fusion additionnels de l'une des matrices de commutation à la quatrième entrée de l'un des modules de fusion additionnels de l'autre matrice de commutation ;
- l'un au moins des liens optiques reliant les matrices de commutation peut être équipé d'un moyen d'amplification ;
- chaque première sortie d'un module de diffusion est propre à délivrer au moins l'un des canaux multiplexés reçus par la première entrée de ce module de diffusion, chaque deuxième sortie d'un module de fusion de la seconde matrice de commutation est propre à délivrer au moins un canal reçu sur l'une des deuxièmes entrées de ce module de fusion, et chaque deuxième sortie d'un module de fusion additionnel est propre à délivrer au moins un canal reçu sur l'une des deuxièmes entrées de ce module de fusion additionnel ;
- ses modules de diffusion et chaque module de diffusion additionnel peuvent par exemple être des coupleurs optiques à au moins une entrée et plusieurs sorties. Dans ce cas, leurs premières sorties ne peuvent pas être adaptées à l'ajustement de puissance optique ;
- en variante, ses modules de diffusion et chaque module de diffusion additionnel peuvent être des modules de sélection de longueurs d'onde, par exemple de type WSS. Dans ce cas, les premières sorties des modules de diffusion peuvent être adaptées à l'ajustement de puissance optique ;
- ses modules de fusion et chaque module de fusion additionnel peuvent par exemple être des modules de sélection de longueurs d'onde, par exemple de type WSS. Dans ce cas, leurs deuxièmes entrées peuvent être adaptées à l'ajustement de puissance optique ;
- en variante, ses modules de fusion et chaque module de fusion additionnel peuvent par exemple être des coupleurs optiques à au moins une sortie et plusieurs entrées. Dans ce cas, leurs deuxièmes entrées ne peuvent pas être adaptées à l'ajustement de puissance optique.

L'invention propose également un noeud de commutation, pour un réseau (D)WDM, équipé d'au moins un dispositif de commutation optique du type de celui présenté ci-avant. Un tel noeud de commutation peut par exemple se présenter sous la forme d'un brasseur optique transparent.

D'autres caractéristiques et avantages de l'invention apparaîtront à l'examen de la description détaillée ci-après, et des dessins annexés, sur lesquels :
- la figure 1 illustre de façon schématique et fonctionnelle un premier exemple de réalisation d'un dispositif de commutation optique selon l'invention,
- la figure 2 illustre de façon schématique et fonctionnelle un premier exemple de réalisation d'une première matrice de commutation pouvant équiper le dispositif de commutation optique illustré sur la figure 1,
- la figure 3 illustre de façon schématique et fonctionnelle un premier exemple de réalisation d'une seconde matrice de commutation pouvant équiper le dispositif de commutation optique illustré sur la figure 1,
- la figure 4 illustre de façon schématique et fonctionnelle un deuxième exemple de réalisation d'un dispositif de commutation optique selon l'invention,
- la figure 5 illustre de façon schématique et fonctionnelle un deuxième exemple de réalisation d'une première matrice de commutation pouvant équiper le dispositif de commutation optique illustré sur la figure 4,
- la figure 6 illustre de façon schématique et fonctionnelle un deuxième exemple de réalisation d'une seconde matrice de commutation pouvant équiper le dispositif de commutation optique illustré sur la figure 4,
- la figure 7 illustre de façon schématique et fonctionnelle un troisième exemple de réalisation d'un dispositif de commutation optique selon l'invention,
- la figure 8 illustre de façon schématique et fonctionnelle un troisième exemple de réalisation d'une première matrice de commutation pouvant équiper le dispositif de commutation optique illustré sur la figure 7,
- la figure 9 illustre de façon schématique et fonctionnelle un troisième exemple de réalisation d'une seconde matrice de commutation pouvant équiper le dispositif de commutation optique illustré sur la figure 7, et
- la figure 10 illustre trois courbes représentant l'évolution de la puissance transmise (en dB) par un port de type WSS en fonction de la longueur d'onde (en nm), respectivement en l'absence d'atténuation (pointillés), en présence d'un filtrage avec une atténuation de 5 dB (trait continu - port de type 2), et en présence d'un filtrage avec une atténuation de 5 dB (trait discontinu - port de type 1).

Les dessins annexés pourront non seulement servir à compléter l'invention, mais aussi contribuer à sa définition, le cas échéant.

L'invention a pour objet de proposer une nouvelle architecture de dispositif de commutation optique permettant de constituer des noeuds de commutation transparents, par exemple de degré supérieur ou égal à 4, et ne présentant pas ou quasiment pas de défaut de platitude spectrale induit par filtrage, pour un réseau optique transparent.

Dans ce qui suit, on considère à titre d'exemple non limitatif que les noeuds de commutation sont des brasseurs optiques transparents (ou OXCs pour « Optical Cross-Connects ») d'un réseau à multiplexage de longueurs d'onde (ou (D)WDM pour « (Dense) Wavelength Division Multiplexing »). Ces noeuds peuvent également présenter des fonctionnalités d'insertion/extraction.

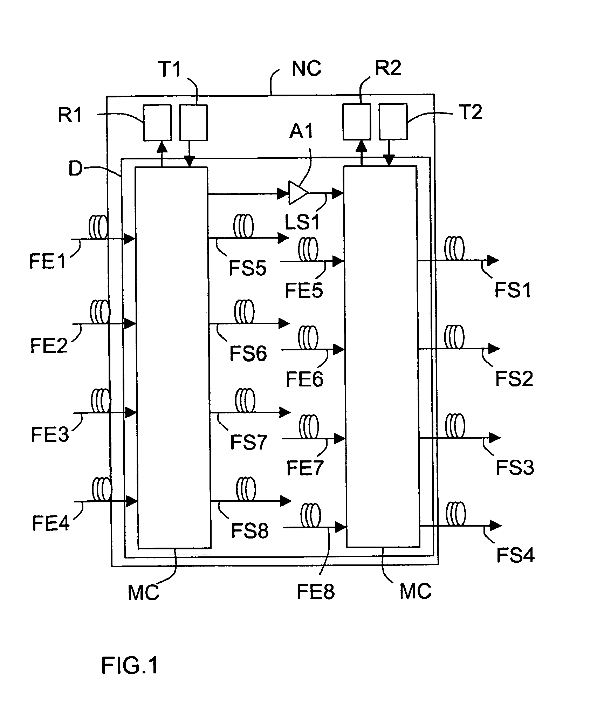

Comme cela est illustré sur la figure 1, un noeud (de commutation) NC comprend au moins un dispositif de commutation optique D, selon l'invention.

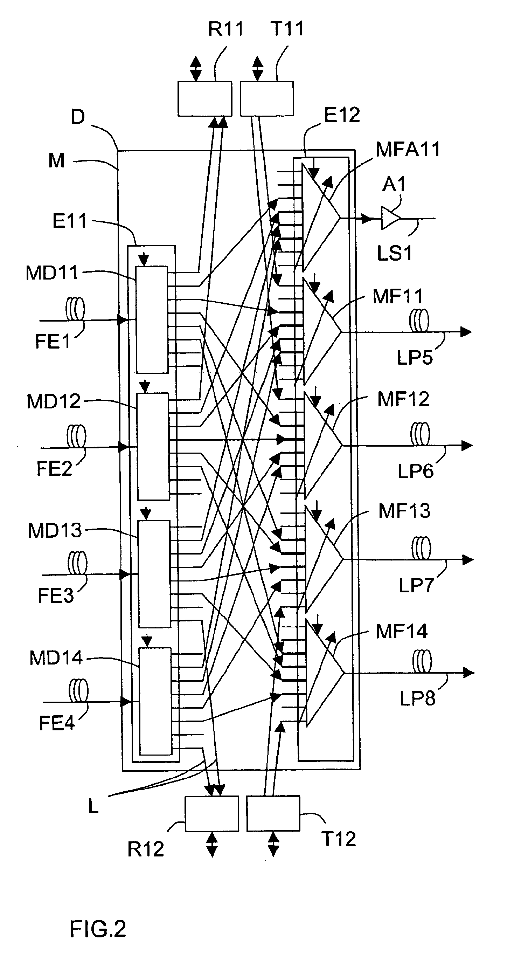

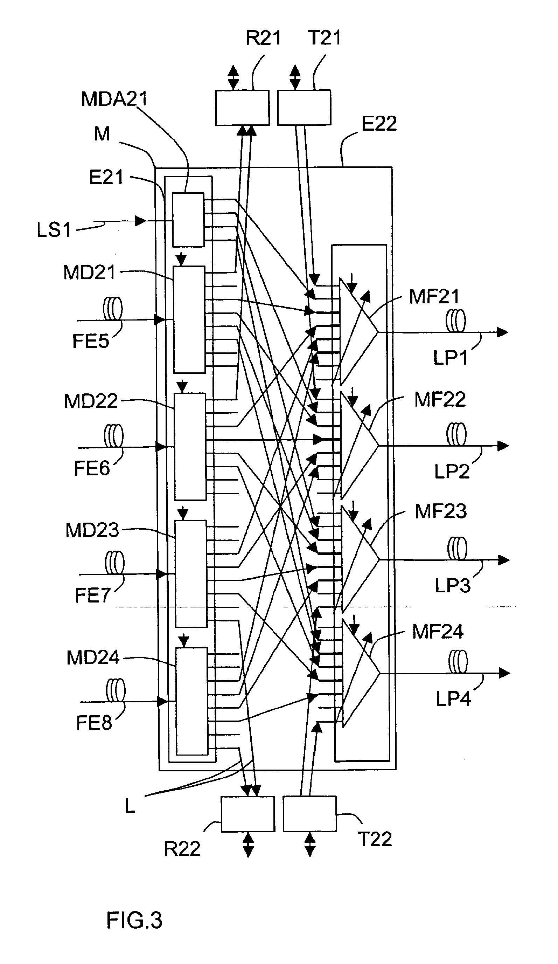

Le dispositif D comporte au moins des première MC1 et seconde MC2 matrices de commutation couplées optiquement. Un premier exemple de réalisation de première matrice de commutation MC1 est illustré sur la figure 2, tandis qu'un premier exemple de réalisation de seconde matrice de commutation MC2 est illustré sur la figure 3.

Chaque matrice de commutation MCi (ici i = 1 ou 2, mais il peut prendre une valeur supérieure à 2) comprend des premier Ei1 et second Ei2 étages couplés optiquement l'un à l'autre par des liens optiques L.

Chaque premier étage Ei1 comporte au moins Nᵢ modules de diffusion MDijᵢ (j₁ = 1 à N₁ et j₂ = N₁ +1 à N₁ + N₂) comprenant chacun au moins une première entrée et Mᵢ premières sorties. Chaque première entrée d'une matrice de commutation MCi définit l'un des ports d'entrée du dispositif D. Chaque port d'entrée est couplé à une portion d'une ligne optique d'entrée (ou amont) FEjᵢ, comme par exemple une fibre optique, dans laquelle « circulent » des canaux de longueurs d'onde différentes multiplexés, également appelés multiplex spectral de signaux optiques.

Il est important de noter que le nombre Nᵢ de modules de diffusion MDijᵢ peut varier d'une matrice de commutation MCi à une autre MCi'. De même, le nombre Mᵢ de premières sorties des modules de diffusion MDijᵢ peut varier d'une matrice de commutation MCi à une autre MCi'. En d'autres termes, on peut avoir Nᵢ = Nᵢ, ou Nᵢ ≠Nᵢ, et Mᵢ = Mᵢ, ou Mᵢ ≠ M_{i'}. Dans les exemples non limitatifs illustrés sur les figures et décrits ci-après, on a Nᵢ = Nᵢ, et Mᵢ = M_{i'}, et plus précisément N₁ = N₂ et M₁ = M₂.

Dans ce qui suit, on appelle canal optique un canal associé à une longueur d'onde donnée. Par exemple chaque fibre optique d'entrée FEjᵢ est capable de transporter R canaux optiques (R>0).

Dans les exemples illustrés sur les figures 1 à 9, l'indice j₁ prend des valeurs comprises entre 1 et 4 et l'indice j₂ prend des valeurs comprises entre 5 et 8, du fait que N₁ et N₂ sont tous les deux égaux à 4 (à titre illustratif). Mais, les indices jᵢ ne sont pas limités à ces valeurs qui sont fixées par le nombre de ports d'entrée du dispositif D.

Par ailleurs, dans les exemples illustrés sur les figures 1 à 9, tous les Mᵢ (ici M1 et M2) sont égaux à 8. Mais la valeur de chaque Mᵢ peut être inférieure ou supérieure à 8, dès lors que le Mᵢ considéré est strictement supérieur au Nᵢ correspondant pour des raisons qui seront évoquées plus loin.

Chaque module de diffusion MDijᵢ est chargé d'aiguiller des canaux optiques multiplexés qu'il reçoit sur son entrée (couplée à une ligne optique d'entrée Fljᵢ) en fonction de leurs longueurs d'onde respectives vers une ou plusieurs de ses Mᵢ premières sorties. En d'autres termes, un module de diffusion MDijᵢ assure une fonction de « routage interne » au moins partiel qui lui permet de délivrer sur chacune de ses Mᵢ premières sorties un ou plusieurs canaux optiques (voir même tous) d'un multiplex qu'il a reçu sur sa première entrée.

Dans les exemples illustrés sur les figures 1 à 9, chaque module de diffusion MDijᵢ comprend une première sortie d'extraction qui est couplée à un module de d'extraction Ri1 ou Ri2 du noeud NC. Dans une variante, les modules d'extraction Ri1 et Ri2 pourraient faire partie du dispositif D. Sur les figures 2 et 3 (5 et 6, et 8 et 9) chaque matrice de commutation MCi comporte deux modules d'extraction Ri1 et Ri2 séparés, mais ils pourraient être regroupés en un unique module Ri comme illustré sur la figure 1. Cette première sortie d'extraction permet de récupérer au niveau du noeud NC les signaux qui sont contenus dans un ou plusieurs canaux transportés par l'une quelconque des lignes d'entrée FEjᵢ, en vue d'un traitement local et/ou d'une transmission à au moins un terminal raccordé au noeud NC.

Dans les exemples illustrés sur les figures 1 à 9, les modules de diffusion MDijᵢ sont de type non sélectif. Il s'agit par exemple de coupleurs optiques (ou « optical splitters »), chargés de délivrer sur chacune de leurs premières sorties l'ensemble des canaux optiques de chaque multiplex que reçoit leur première entrée. Il est important de noter que les canaux optiques qui sont aiguillés vers une première sortie donnée d'un coupleur MDijᵢ doivent être associés à des longueurs d'onde différentes.

Dans une variante, les modules de diffusion pourraient être de type sélectif. Dans ce cas, ils constituent par exemple des modules de sélection de longueurs d'onde de type WSS, tels que ceux présentés dans la partie introductive. Ces modules de sélection de longueurs d'onde sont réglables en fonction d'une commande, et peuvent délivrer sur chacune de leurs Mᵢ premières sorties soit un canal optique sélectionné parmi les canaux optiques reçus sur leur première entrée, soit un multiplex constitué d'un ensemble de canaux optiques sélectionnés parmi les canaux optiques du multiplex reçu sur leur première entrée, en fonction d'une commande spécifique. La sélection des canaux se fait en interne au moyen de filtres intégrés.

Les modules de sélection de longueurs d'onde de type WSS sont avantageux du fait, notamment, qu'ils induisent de faibles pertes d'insertion comparées à celles induites par de simples coupleurs, lorsque leur nombre de sorties (Mᵢ) est supérieur à 4.

Chaque deuxième étage Ei2 comporte tout d'abord au moins Nᵢ modules de fusion MFij comprenant chacun Nᵢ deuxièmes entrées, au moins une troisième entrée, et une deuxième sortie destinée à être couplée à une ligne optique de sortie (ou aval) FSjᵢ, comme par exemple une fibre optique, dans laquelle « circulent » des multiplex spectral de signaux optiques.

Chaque module de fusion MFijᵢ assure une fonction de multiplexage (éventuellement programmable) permettant de fournir sur sa deuxième sortie soit un canal optique sélectionné parmi les canaux optiques reçus sur ses Nᵢ deuxièmes entrées et sa ou ses troisièmes entrées, soit un multiplex constitué d'un ensemble de canaux optiques sélectionnés parmi les canaux optiques reçus sur ses Nᵢ deuxièmes entrées et sa ou ses troisièmes entrées.

Dans les exemples illustrés sur les figures 1 à 9, chaque module de fusion MFijᵢ comprend une troisième entrée d'insertion qui est couplée à un module d'insertion Ti1 ou Ti2 du noeud NC. Dans une variante, les modules d'insertion Ti1 et Ti2 pourraient faire partie du dispositif D. Sur les figures 2 et 3 (5 et 6, et 8 et 9), chaque matrice de commutation MCi comporte deux modules d'insertion Ti1 et Ti2 séparés, mais ils pourraient être regroupés en un unique module Ti comme illustré sur les figures 1, 4 et 7. Cette troisième entrée d'insertion permet d'alimenter le module de fusion MFijᵢ concerné avec un ou plusieurs canaux de manière à le(s) multiplexer, éventuellement, avec d'autres canaux reçus par l'une au moins de ses autres deuxièmes entrées.

Il est important de noter qu'un module de fusion MFijᵢ peut éventuellement comporter plusieurs troisièmes entrées d'insertion, tout comme un module de diffusion MDijᵢ peut éventuellement comporter plusieurs premières sorties d'extraction.

Dans les exemples illustrés sur les figures 1 à 9, les modules de fusion MFijᵢ sont de type sélectif. Il s'agit par exemple de modules de sélection de longueurs d'onde de type WSS, tels que ceux présentés ci-avant et dans la partie introductive. Dans ce cas, ils sont réglables en fonction d'une commande, et peuvent délivrer sur leur deuxième sortie soit un canal optique sélectionné parmi les canaux optiques reçus sur leurs Nᵢ deuxièmes entrées et leur(s) troisième(s) entrée(s), soit un multiplex constitué d'un ensemble de canaux optiques sélectionnés parmi les canaux optiques reçus sur leurs Nᵢ deuxièmes entrées et leur(s) troisième(s) entrée(s), en fonction d'une commande spécifique.

Mais, dans une variante, ils pourraient être de type non sélectif. Dans ce cas, ils constituent par exemple des coupleurs optiques (ou « optical couplers »), chargés de délivrer sur leur deuxième sortie un multiplex constitué de l'ensemble des canaux optiques reçus sur leurs Nᵢ deuxièmes entrées et leur(s) troisième(s) entrée(s).

Les deuxièmes entrées des modules de fusion MFijᵢ, ou certaines au moins des premières sorties des modules de diffusion MDijᵢ, sont d'un premier type, tandis que certaines au moins des premières sorties des modules de diffusion MDijᵢ ou les troisièmes entrées des modules de fusion MFijᵢ sont d'un second type.

On entend ici par « entrée ou sortie d'un premier type » une entrée ou une sortie qui est adaptée de manière à permettre une atténuation choisie de la puissance optique de chacun des canaux qu'elle reçoit. En jouant de façon appropriée sur les atténuations respectives des différentes deuxièmes entrées ou premières sorties on peut ainsi réaliser une égalisation spectrale.

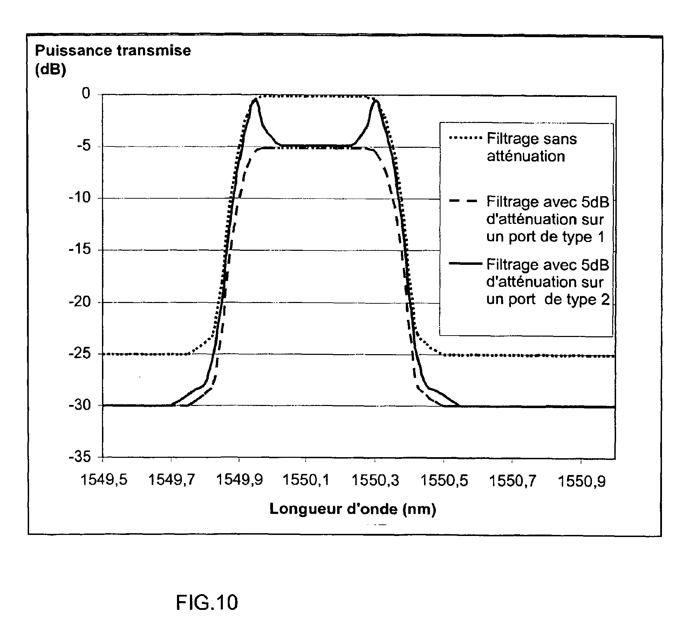

Par ailleurs, on entend ici par « entrée ou sortie d'un second type » une entrée ou une sortie qui détériore l'intégrité du signal optique qui emprunte cette sortie lorsque l'on procède à l'ajustement de la puissance optique du canal véhiculant ce signal. On entend ici par « détériorer » le fait d'induire des défauts de platitude spectrale se traduisant par l'apparition de lobes latéraux (ou side lobes). Sur la figure 10 se trouvent illustrées trois courbes représentant l'évolution de la puissance transmise (en dB) par un port de type WSS en fonction de la longueur d'onde (en nm), respectivement en l'absence d'atténuation (pointillés), en présence d'un filtrage avec une atténuation de 5 dB (trait continu - port de type 2 - présence de side lobes), et en présence d'un filtrage avec une atténuation de 5 dB (trait discontinu - port de type 1).

Dans les exemples illustrés, les deuxièmes entrées des modules de fusion MFijᵢ sont d'un premier type (elle sont matérialisées par des traits épais), et chaque troisième entrée d'un module de fusion MFijᵢ est d'un second type.

Les modules de fusion MFijᵢ étant ici de type WSS (à titre d'exemple), leurs deuxièmes entrées sont préférentiellement celles qui sont les moins excentrées parmi toutes leurs sorties afin que les canaux qui les traversent soient le moins perturbés, tandis que les troisièmes entrées sont les plus excentrées.

Le second étage E2 de l'une au moins des matrices de commutation MCi comprend au moins un module de fusion additionnel MFAik comportant au moins Nᵢ deuxièmes entrées et au moins une deuxième sortie.

Dans les exemples illustrés (non limitatifs), les deuxièmes entrées de chaque module de fusion additionnel MFAik sont du premier type. Elles sont donc, ici, adaptées à l'ajustement de puissance optique et participent à l'égalisation spectrale mise en oeuvre par le dispositif D.

Il est important de noter que seules les deuxièmes entrées des modules de fusion de type sélectif (par exemple des WSS) ou seules les premières sorties des modules de diffusion de type sélectif (par exemple des WSS) peuvent être adaptées à l'ajustement de puissance optique. Lorsque les modules de fusion sont de type non sélectif (par exemple des coupleurs), leurs deuxièmes entrées ne peuvent donc pas être adaptées à l'ajustement de puissance optique. De même, lorsque les modules de diffusion sont de type non sélectif (par exemple des coupleurs), leurs premières sorties ne peuvent donc pas être adaptées à l'ajustement de puissance optique. Il en va de même pour les modules de fusion additionnels et les modules de diffusion additionnels.

Comme cela est illustré, chaque module de fusion additionnel MFAik peut être identique à un module de fusion MFijᵢ du second étage E2i dont il fait partie, mais on n'utilise préférentiellement que ses deuxièmes entrées (ici du premier type) et non ses troisièmes entrées (qui sont ici les plus excentrées du fait qu'elles font partie de WSSs, à titre d'exemple). Chaque module de fusion additionnel MFAik peut donc être soit de type sélectif (module de sélection de longueurs d'onde par exemple de type WSS), comme dans les exemples illustrés, soit de type non sélectif (coupleur de type « optical coupler »).

La deuxième sortie de chaque module de fusion additionnel MFAik d'une matrice de commutation MCi est couplée à une troisième entrée de chacun des Nᵢ modules de fusion MFi'jᵢ, de l'autre matrice de commutation MCi' (i' ≠i), au moyen d'un lien optique LSn.

Le couplage entre la deuxième sortie d'un module de fusion additionnel MFAik de l'une au moins des matrices de commutation MCi et une troisième entrée de chacun des Nᵢ modules de fusion MFi'jᵢ, de l'autre matrice de commutation MCi' (i' ≠i) peut se faire au travers d'un module de diffusion additionnel MDAik, comportant une quatrième entrée et Nᵢ premières sorties et faisant partie du premier étage E1 de l'autre matrice de commutation MCi'. Plus précisément, la première extrémité d'un lien optique LSn est raccordée à la deuxième sortie d'un module de fusion additionnel MFAik associé d'une matrice de commutation MCi, tandis que la seconde extrémité de ce lien optique LSn est raccordée à la quatrième entrée d'un module de diffusion additionnel MDAi'k associé de l'autre matrice de commutation MCi'.

Il est important de noter que les matrices de commutation MCi peuvent comporter des nombres de module de diffusion additionnel MDAik différents et/ou des nombres de module de fusion additionnel MFAik différents.

Ainsi, dans le premier exemple de réalisation du dispositif D, illustré sur les figures 1 à 3, seule la première matrice de commutation MC1 (figure 2) comprend un module de fusion additionnel MFA11, tandis que seule la seconde matrice de commutation MC2 (figure 3) comprend un module de diffusion additionnel MDA21. Les deux matrices de commutation MCi ne sont donc pas identiques. Plus précisément, la deuxième sortie du module de fusion additionnel MFA11 du second étage E12 de la première matrice de commutation MC1 est couplée à la quatrième entrée du module de diffusion additionnel MDA21 du premier étage E21 de la seconde matrice de commutation MC2 au moyen du lien optique LS1 (n = 1).

Dans ce premier exemple de réalisation du dispositif D, les canaux qui proviennent des lignes optiques d'entrée FE1 à FE4 peuvent soit ressortir par les lignes optiques de sortie FS5 à FS8 couplées respectivement aux deuxièmes sorties des modules de fusion MF11 à MF14 de la première matrice de commutation MC1, soit ressortir par les lignes optiques de sortie FS1 à FS4 couplées respectivement aux deuxièmes sorties des modules de fusion MF21 à MF24 de la seconde matrice de commutation MC2, grâce au module de fusion MFA11 et au module de diffusion MDA21. Les canaux qui proviennent des lignes optiques d'entrée FE5 à FE8 ne peuvent que ressortir par les lignes optiques de sortie FS1 à FS4.

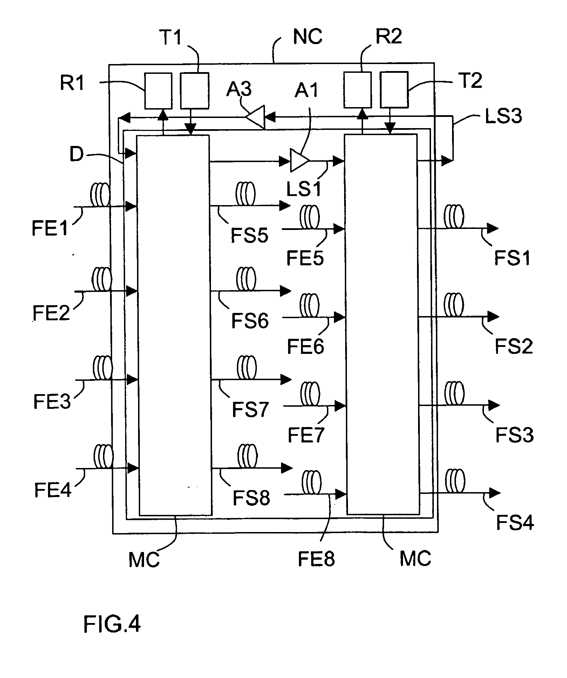

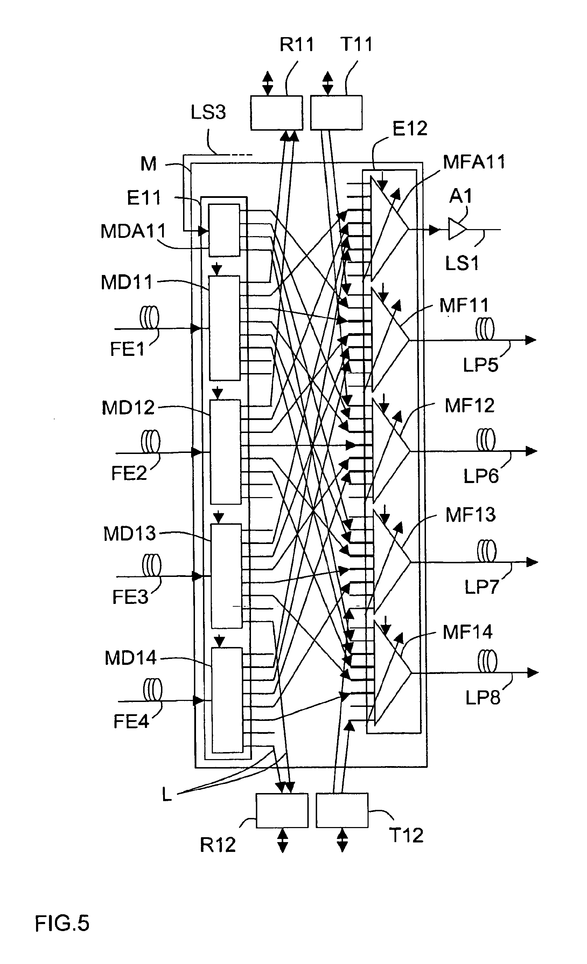

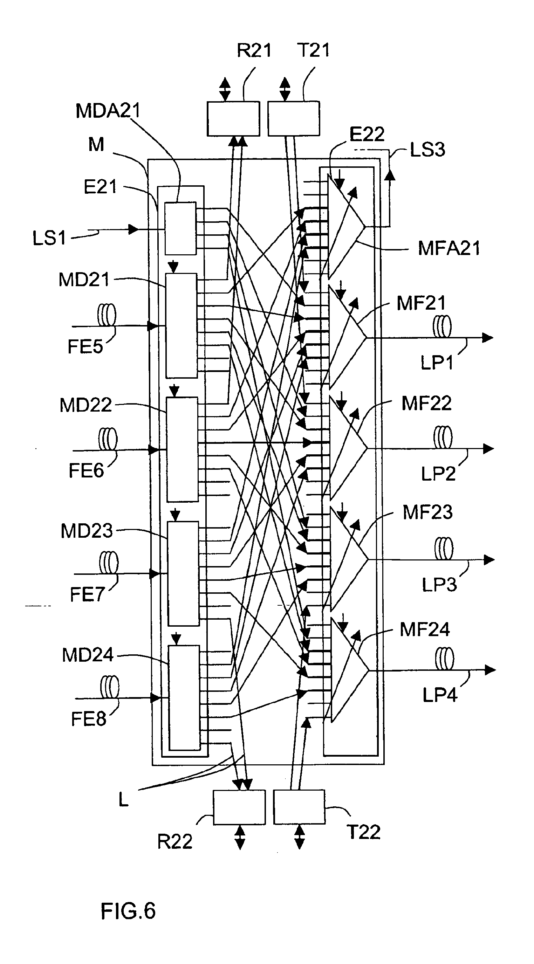

Dans le deuxième exemple de réalisation du dispositif D, illustré sur les figures 4 à 6, chaque matrice de commutation MCi (MC1 (figure 5), MC2 (figure 6)) comprend à la fois un module de fusion additionnel MFAi1 (MFA11, MFA21) et un module de diffusion additionnel MDAi1 (MDA11, MDA21). Les deux matrices de commutation MCi sont donc (identiques). Plus précisément, la deuxième sortie du module de fusion additionnel MFA11 du second étage E12 de la première matrice de commutation MC1 est couplée à la quatrième entrée du module de diffusion additionnel MDA21 du premier étage E21 de la seconde matrice de commutation MC2 au moyen du lien optique LS1 (n = 1), et la deuxième sortie du module de fusion additionnel MFA21 du second étage E22 de la seconde matrice de commutation MC2 est couplée à la quatrième entrée du module de diffusion additionnel MDA11 du premier étage E11 de la première matrice de commutation MC1 au moyen du lien optique LS3 (n = 3).

Dans ce deuxième exemple de réalisation du dispositif D, les canaux qui proviennent des lignes optiques d'entrée FE1 à FE4 peuvent soit ressortir par les lignes optiques de sortie FS5 à FS8 couplées respectivement aux deuxièmes sorties des modules de fusion MF11 à MF14 de la première matrice de commutation MC1, soit ressortir par les lignes optiques de sortie FS1 à FS4 couplées respectivement aux deuxièmes sorties des modules de fusion MF21 à MF24 de la seconde matrice de commutation MC2, grâce au module de fusion MFA11 et au module de diffusion MDA21. Les canaux qui proviennent des lignes optiques d'entrée FE5 à FE8 peuvent soit ressortir par les lignes optiques de sortie FS1 à FS4, soit ressortir par les lignes optiques de sortie FS5 à FS8, grâce au module de fusion MFA21 et au module de diffusion MDA11.

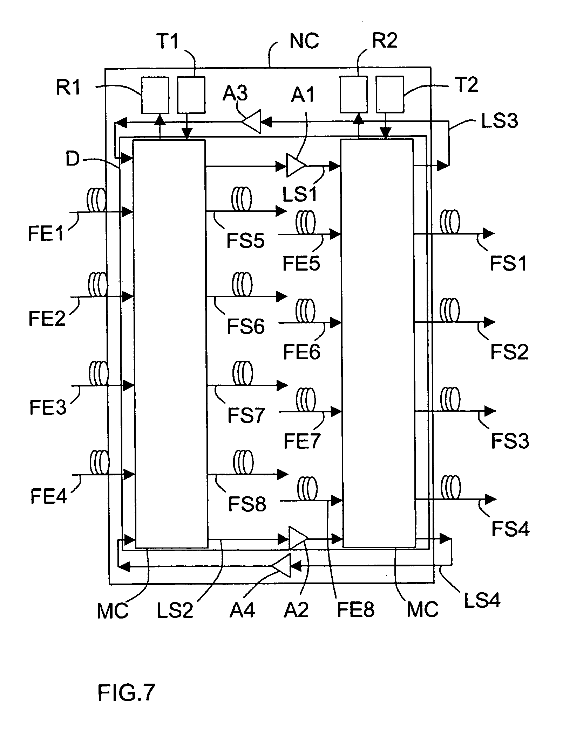

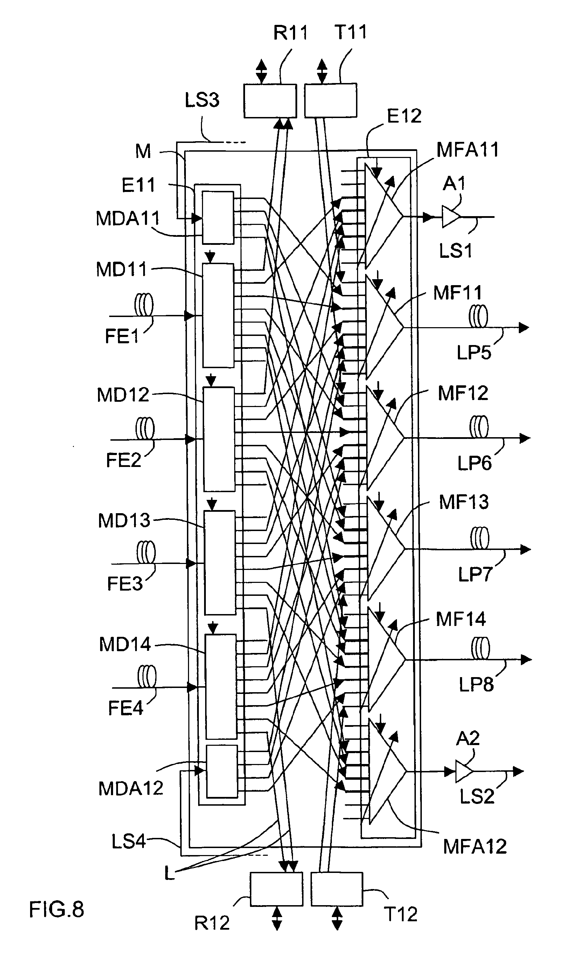

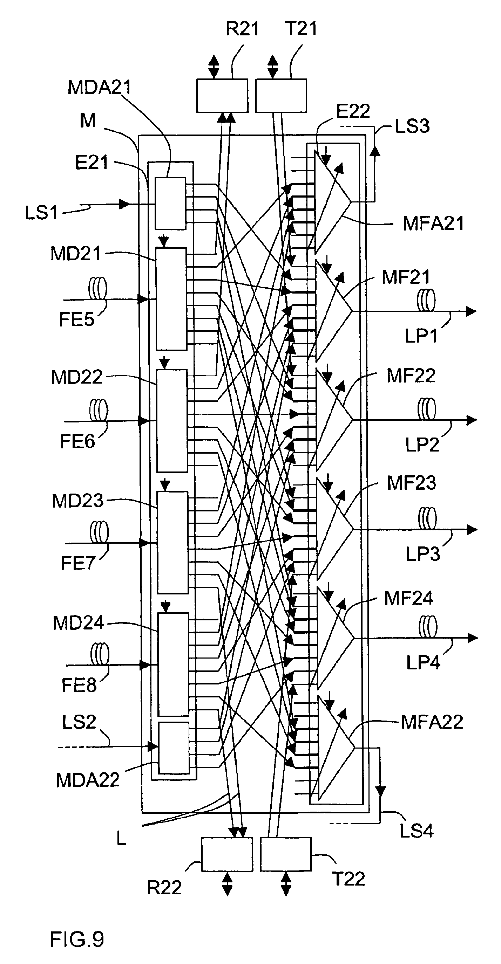

Dans le troisième exemple de réalisation du dispositif D, illustré sur les figures 7 à 9, chaque matrice de commutation MCi (MC1 (figure 8), MC2 (figure 9)) comprend à la fois deux modules de fusion additionnels MFAi1 et MFAi2 et deux modules de diffusion additionnels MDAi1 et MDAi2. Les deux matrices de commutation MCi sont donc identiques, dans cet exemple où les Nᵢ sont égaux entre eux et les Mᵢ également égaux entre eux. Plus précisément, la deuxième sortie du module de fusion additionnel MFA11 du second étage E12 de la première matrice de commutation MC1 est couplée à la quatrième entrée du module de diffusion additionnel MDA21 du premier étage E21 de la seconde matrice de commutation MC2 au moyen du lien optique LS1 (n = 1), la deuxième sortie du module de fusion additionnel MFA12 du second étage E12 de la première matrice de commutation MC1 est couplée à la quatrième entrée du module de diffusion additionnel MDA22 du premier étage E21 de la seconde matrice de commutation MC2, au moyen du lien optique LS (n = 2), la deuxième sortie du module de fusion additionnel MFA21 du second étage E22 de la seconde matrice de commutation MC2 est couplée à la quatrième entrée du module de diffusion additionnel MDA11 du premier étage E11 de la première matrice de commutation MC1 au moyen du lien optique LS3 (n = 3), et la deuxième sortie du module de fusion additionnel MFA22 du second étage E22 de la seconde matrice de commutation MC2 est couplée à la quatrième entrée du module de diffusion additionnel MDA12 du premier étage E11 de la première matrice de commutation MC1 au moyen du lien optique LS4 (n = 4).

Dans ce troisième exemple de réalisation du dispositif D, les canaux qui proviennent des lignes optiques d'entrée FE1 à FE4 peuvent soit ressortir par les lignes optiques de sortie FS5 à FS8 couplées respectivement aux deuxièmes sorties des modules de fusion MF11 à MF14 de la première matrice de commutation MC1, soit ressortir par les lignes optiques de sortie FS1 à FS4 couplées respectivement aux deuxièmes sorties des modules de fusion MF21 à MF24 de la seconde matrice de commutation MC2, grâce au module de fusion MFA11 et au module de diffusion MDA21 ou bien grâce au module de fusion MFA12 et au module de diffusion MDA22. Les canaux qui proviennent des lignes optiques d'entrée FE5 à FE8 peuvent soit ressortir par les lignes optiques de sortie FS1 à FS4, soit ressortir par les lignes optiques de sortie FS5 à FS8, grâce au module de fusion MFA21 et au module de diffusion MDA11 ou bien grâce au module de fusion MFA22 et au module de diffusion MDA12.

L'un au moins des liens optiques LSn, qui sont par exemple des fibres optiques, peut être équipé d'un moyen d'amplification An. Dans les trois exemples illustrés sur les figures 1 à 9, chaque lien optique LSn (LS1 à LS4, n = 1 à 4) est équipé d'un moyen d'amplification An (A1 à A4). Chaque moyen d'amplification An peut par exemple être un amplificateur de type EDFA (« Erbium Doped Fibre Amplifier » - amplificateur à fibre dopée erbium)

Chaque module de diffusion additionnel MDAik est préférentiellement du même type que les modules de diffusion MDAijᵢ du premier étage Ei1 dont il fait partie. Par conséquent, chaque module de diffusion additionnel MDAik peut être soit de type non sélectif (coupleur de type « optical splitter »), comme dans les exemples illustrés, soit de type sélectif (module de sélection de longueurs d'onde par exemple de type WSS).

Eventuellement, et comme illustré, un module de diffusion additionnel MDAik ne comporte que Nᵢ (premières) sorties tandis qu'un module de diffusion MDAijᵢ comporte Mᵢ (premières) sorties (Mᵢ>Nᵢ). Ainsi, dans les exemples illustrés où tous les Mᵢ sont égaux à 8 et tous les Nᵢ égaux à 4), chaque module de diffusion additionnel MDAik comporte 4 premières sorties, tandis que chaque module de diffusion MDijᵢ comporte 8 premières sorties.

Lorsque les matrices de commutation MCi sont identiques, elles peuvent comporter n'importe quel nombre de module de diffusion additionnel MDAik et/ou n'importe quel nombre de module de fusion additionnel MFAik. Par exemple, ce nombre peut être égal à 1 (k = 1) ou à 3 (k = 1 à 3) ou encore à 4 (k = 1 à 4).

Grâce à l'invention, tous les canaux qui parviennent dans un dispositif de commutation optique D peuvent être atténués correctement, ce qui permet d'effectuer effectivement une égalisation spectrale.

L'invention ne se limite pas aux modes de réalisation de dispositif de commutation optique et de noeud de communication décrits ci-avant, seulement à titre d'exemple, mais elle englobe toutes les variantes que pourra envisager l'homme de l'art dans le cadre des revendications ci-après.

Ainsi, dans ce qui précède on a décrit des exemples de réalisation d'un dispositif de commutation optique comprenant seulement deux matrices de commutation couplées optiquement l'une à l'autre. Mais, l'invention s'applique également aux cas où le dispositif de commutation optique comporte plus de deux matrices de commutation couplées optiquement les unes aux autres. Par exemple, on peut envisager que le dispositif comporte une première matrice de commutation couplée optiquement à une deuxième matrice de commutation, elle-même couplée à une troisième matrice de commutation, qui est elle-même couplée optiquement à la première matrice de commutation.

Par ailleurs, on a décrit dans ce qui précède un exemple de réalisation d'un dispositif de commutation optique dans lequel les matrices de commutation comportent un nombre Nᵢ de modules de diffusion (et de modules de fusion) égal à quatre (4). Mais, l'invention s'applique à toutes les situations dans lesquelles Nᵢ est supérieur ou égal à deux (Nᵢ ≥2).

En outre, on a décrit dans ce qui précède, en référence aux figures 1 à 9, trois exemples de réalisation d'un dispositif de commutation optique dans lequel les matrices de commutation comportent des modules de diffusion (y compris additionnels) de type coupleur (optical splitter) et des modules de fusion (y compris additionnels) de type module de sélection de longueurs d'onde (par exemple WSS). Mais on peut envisager, d'une part, une première variante dans laquelle les matrices de commutation comportent des modules de diffusion (y compris additionnels) et des modules de fusion (y compris additionnels) de type module de sélection de longueurs d'onde (par exemple WSS), et d'autre part, une seconde variante dans laquelle les matrices de commutation comportent des modules de diffusion (y compris additionnels) de type module de sélection de longueurs d'onde (par exemple WSS) et des modules de fusion (y compris additionnels) de type coupleur (optical coupler).

## Revendications

1. Dispositif de commutation optique (D) pour un noeud de commutation (NC) d'un réseau optique transparent, comprenant au moins deux matrices de commutation (MCi) couplées entre elles,
chaque matrice de commutation (MCi) comprenant :
- un premier étage (Ei1) comportant Nᵢ modules de diffusion (MDij) munis chacun d'une entrée, propre à être couplée à une ligne optique amont (FEj) dédiée au transport de canaux multiplexés, et de Mᵢ sorties, avec Nᵢ entier supérieur ou égal à deux et Mᵢ entier supérieur ou égal à Nᵢ, et
- un deuxième étage (Ei2) comportant Nᵢ modules de fusion (MFij) comprenant chacun Nᵢ entrées couplées chacune à l'une des sorties de l'un des Nᵢ modules de diffusion (MDij) via un lien optique (L), et une sortie propre à être couplée à une ligne optique aval (FSjᵢ) dédiée au transport de canaux multiplexés,
le dispositif de commutation optique étant **caractérisé en ce qu'**il comprend au moins un premier module de fusion additionnel (MFA11) comprenant des entrées couplées via des liens optiques à des sorties desdits modules de diffusion (MD1j) d'une première desdites matrices de commutation et une sortie,
**en ce que** les entrées desdits modules de fusion et dudit premier module de fusion additionnel qui sont couplées auxdites sorties des modules de diffusion
ou les sorties des modules de diffusion qui sont couplées auxdites entrées desdits modules de fusion et dudit module de fusion additionnel sont adaptées à l'ajustement de puissance optique,
**en ce que** des modules de fusion (MF2j) d'une deuxième desdites matrices de commutation (MC2) présentent respectivement au moins une entrée additionnelle,
et **en ce qu'**il comprend au moins un lien optique (LS1) couplant la sortie dudit premier module de fusion additionnel (MFA11) auxdites entrées additionnelles des modules de fusion (MF2j) de la deuxième matrice de commutation (MC2).

2. Dispositif selon la revendication 1, **caractérisé en ce qu'**il comprend au moins un premier module de diffusion additionnel (MDA21) muni d'une entrée raccordée à un lien optique (LS1) de manière à être couplée à la sortie dudit premier module de fusion additionnel (MFA11), et de sorties couplées aux entrées additionnelles des modules de fusion (MF2j) de la deuxième matrice de commutation (MC2).

3. Dispositif selon l'une des revendications 1 et 2, **caractérisé en ce qu'**il comprend au moins un deuxième module de fusion additionnel (MFA21) comprenant des entrées couplées via des liens optiques à des sorties desdits modules de diffusion (MD2j) de ladite deuxième matrice de commutation et une sortie, lesdites entrées du deuxième module de fusion additionnel (MFA21) ou les sorties des modules de diffusion qui sont couplées auxdites entrées étant adaptées à l'ajustement de puissance optique,
**en ce que** des modules de fusion (MF1j) de la première matrice de commutation (MC1) présentent respectivement au moins une entrée additionnelle,
et **en ce qu'**il comprend au moins un lien optique (LS3) couplant la sortie dudit deuxième module de fusion additionnel (MFA21) auxdites entrées additionnelles des modules de fusion (MF1j) de la première matrice de commutation (MC1).

4. Dispositif selon la revendication 3, **caractérisé en ce qu'**il comprend au moins un deuxième module de diffusion additionnel (MDA11) muni d'une entrée raccordée à un lien optique (LS3) de manière à être couplée à la sortie dudit deuxième module de fusion additionnel (MFA21), et de sorties couplées auxdites entrées additionnelles des modules de fusion (MF1j) de la première matrice de commutation (MC1).

5. Dispositif selon la revendication 4, **caractérisé en ce que** chacune desdites matrices de commutation comprend au moins deux modules de diffusion additionnels (MDAik) et au moins deux modules de fusion additionnels (MFAik), et **en ce qu'**il comprend au moins quatre liens optiques (LSn) couplant chacun la sortie de l'un desdits modules de fusion additionnels (MFAik) de l'une desdites matrices de commutation (MCi) à l'entrée de l'un desdits modules de diffusion additionnels (MDAi'k) de l'autre matrice de commutation (MCi').

6. Dispositif selon l'une des revendications 1 à 5, **caractérisé en ce que** l'un au moins desdits liens optiques (LSn) est équipé d'un moyen d'amplification (An).

7. Dispositif selon l'une des revendications 1 à 6, **caractérisé en ce que** lesdits modules de diffusion (MDij) et chaque module de diffusion additionnel (MDAik) est choisi dans un groupe comprenant les coupleurs optiques à au moins une entrée et plusieurs sorties et les modules de sélection de longueurs d'onde.

8. Dispositif selon l'une des revendications 1 à 7, **caractérisé en ce que** lesdits modules de fusion (MFij) et chaque module de fusion additionnel (MFAik) sont des modules de sélection de longueurs d'onde.

9. Dispositif selon l'une des revendications 1 à 8, **caractérisé en ce que** lesdits modules de fusion (MFij) et chaque module de fusion additionnel (MFAik) sont choisis dans un groupe comprenant au moins les coupleurs optiques à au moins une sortie et plusieurs entrées et les modules de sélection de longueurs d'onde.

10. Dispositif selon l'une des revendications 1 à 9, **caractérisé en ce que** lesdits modules de diffusion (MDij) et chaque module de diffusion additionnel (MDAik) sont des modules de sélection de longueurs d'onde.

11. Dispositif selon l'une des revendications 7 à 10, **caractérisé en ce que** lesdits modules de sélection de longueurs d'onde (MDij ; MFij) sont du type dit « WSS ».

12. Noeud de commutation (NC) agencé sous la forme d'un brasseur optique transparent pour un réseau optique à multiplexage de longueurs d'onde, **caractérisé en ce qu'**il comprend au moins un dispositif de commutation optique (D) selon l'une des revendications précédentes.

## Claims

1. Optical switching device (D) for a switching node (NC) of a transparent optical network; comprising at least two inter-coupled switching matrices (MCi), with each switching matrix (MCi) comprising:
- a first stage (Ei1) comprising Nᵢ distribution modules (MDij), each equipped with an input, able to be coupled to an upstream optical line (FEj) dedicated to transporting multiplexed channels, and Mᵢ outputs, with Nᵢ being an integer greater than or equal to two and Mᵢ an integer greater than or equal to Nᵢ, and
- a second stage (Ei2) comprising Nᵢ fusion modules (MFij), each comprising Nᵢ inputs, each coupled to one of the outputs of one of the Nᵢ distribution modules (MDij) via an optical link (L), and an output able to be coupled to a downstream optical line (FSjᵢ) dedicated to transporting multiplexed channels,
the optical switching device being **characterised in that** it comprises at least a first additional fusion module (MFA11) comprising inputs coupled via optical links to outputs of said distribution modules (MD1j) of a first of said switching matrices and an output,
**in that** the inputs of said fusion modules and said first additional fusion module which are coupled to said outputs of the distribution modules or the outputs of the distribution modules which are coupled to said inputs of said fusion modules and of said additional fusion module are adapted to the optical power adjustment,
**in that** fusion modules (MF2j) of a second of said switching matrices (MC2) respectively have at least one additional input,
and **in that** it comprises at least one optical link (LS1) coupling the output of said first additional fusion module (MFA11) to said additional inputs of the fusion modules (MF2j) of the second switching matrix (MC2).

2. Device according to claim 1. **characterised in that** it comprises at least a first additional distribution module (MDA21) equipped with an input connected to an optical link (LS1) in such a way as to be coupled to the output of said first additional fusion module (MFA11), and with outputs coupled to the additional inputs of the fusion modules (MF2j) of the second switching matrix (MC2).

3. Device according to one of claims 1 and 2, **characterised in that** it comprises at least a second additional fusion module (MFA21) comprising inputs coupled via optical links to outputs of said distribution modules (MD2j) of said second switching matrix and an output, said inputs of the second additional fusion module (MFA21) or the outputs of the distribution modules which are coupled to said inputs being adapted to the optical power adjustment,
**in that** fusion modules (MF1j) of the first switching matrix (MC1) respectively have at least one additional input,
and **in that** it comprises at least one optical link (LS3) coupling the output of said second additional fusion module (MFA21) to said additional inputs of the fusion modules (MF1j) of the first switching matrix (MC1).

4. Device according to claim 3, **characterised in that** it comprises at least a second additional distribution module (MDA11) equipped with an input connected to an optical link (LS3) in such a way as to be coupled to the output of said second additional fusion module (MFA21), and with outputs coupled to said additional inputs of the fusion modules (MF1j) of the first switching matrix (MC1).

5. Device according to claim 4, **characterised in that** each of said switching matrices comprises at least two additional distribution modules (MDAik) and at least too additional fusion modules (MFAik), and **in that** it comprises at least four optical links (LSn) each coupling the output of one of said additional fusion modules (MFAik) from one of said switching matrices (MCi) to the input of one of said additional distribution modules (MDAi'k) of the other switching matrix (MCi').

6. Device according to one of claims 1 to 5, **characterised in that** at least one of said optical links (LSn) is equipped with a means of amplification (An).

7. Device according to one of claims 1 to 6, **characterised in that** said distribution modules (MDij) and each additional distribution module (MDAik) are chosen in a group comprising the optical couplers with at least one input and several outputs and the wavelength selection modules.

8. Device according to one of claims 1 to 7, **characterised in that** said fusion modules (MFij) and each additional fusion module (MFAik) are wavelength selection modules.

9. Device according to one of claims 1 to 8, **characterised in that** said fusion modules (MFij) and each additional fusion module (MFAik) are chosen in a group comprising at least the optical couplers with at least one output and several inputs and the wavelength selection modules.

10. Device according to one of claims 1 to 9, **characterised in that** said distribution modules (MDij) and each additional distribution module (MDAik) are wavelength selection modules.

11. Device according to one of claims 7 to 10, **characterised in that** said wavelength selection modules (MDij; MFij) are of the "WSS" type.

12. Switching node (NC) arranged in the form of a transparent optical cross-connect for a wavelength multiplexing optical network, **characterised in that** it comprises at least one optical switching device (D) according to one of the previous claims.

## Patentansprüche

1. Optische Schaltvorrichtung (D) für einen Schaltknoten (NC) eines transparenten optischen Netzwerks, mit mindestens zwei Schaltmatrizen (MCi), welche miteinander gekoppelt sind,
wobei jede Schaltmatrix (MCi) umfasst:
- Eine erste Ebene (Ei1) mit N, Übertragungsmodulen (MDij) mit jeweils einem Eingang, welcher für das Koppeln an eine für den Transport von gemultiplexten Kanälen bestimmte optische Uplink-Leitung (FEj) ausgelegt ist, und Mᵢ Ausgängen, wobei Nᵢ ganzzahlig größer als oder gleich zwei ist, und Mᵢ ganzzahlig größer als oder gleich Nᵢ ist, und
- eine zweite Ebene (Ei2) mit Nᵢ Fusionsmodulen (MFij) mit jeweils Nᵢ Eingängen, welche jeweils über eine optische Wegstrecke (L) an einen der Ausgänge eines der Nᵢ übertragungsmodule (MDij) gekoppelt sind, und einem Ausgang, der für das Koppeln an eine für den Transport von gemultiplexten Kanälen bestimmte optische Downlink-Leitung (FSjᵢ)ausgelegtist,
wobei die optische Schaltvorrichtung **dadurch gekennzeichnet ist, dass** sie mindestens ein erstes zusätzliches Fusionsmodul (MFA11) mit über optische Wegstrecken an Ausgänge der besagten Übertragungsmodule (MD1j) einer ersten der besagten Schaltmatrizen gekoppelte Eingänge und einen Ausgang umfasst,
dass die Eingänge der besagten Fusionsmodule und des besagten ersten zusätzlichen Fusionsmoduls, welche an die besagten Ausgänge der Übertragungsmodule gekoppelt sind, oder die Ausgänge der Übertragungsmodule, welche an die besagten Eingänge der besagten Fusionsmodule und des besagten zusätzlichen Fusionsmoduls gekoppelt sind, für die Regulierung der optischen Leistung ausgelegt sind,
dass die Fusionsmodule (MF2j) einer zweiten der besagten Schaltmatrizen (MC2) jeweils mindestens einen zusätzlichen Eingang aufweisen,
und dass sie mindestens eine optische Wegstrecke (LS1) umfasst, welcher den Ausgang des besagten ersten zusätzlichen Fusionsmoduls (MFA11) an die besagten zusätzlichen Eingänge der Fusionsmodule (MF2j) der zweiten Schaltmatrix (MC2) koppelt.

2. Vorrichtung nach Anspruch 1, **dadurch gekennzeichnet, dass** sie mindestens ein erstes zusätzliches Übertragungsmodul (MDA21) mit einem Eingang, welcher derart an eine optische Wegstrecke (LS1) angeschlossen ist, dass er an den Ausgang des besagten ersten zusätzlichen Fusionsmoduls (MFA11) gekoppelt wird, und mit an die zusätzlichen Eingänge der Fusionsmodule (MF2j) der zweiten Schaltmatrix (MC2) gekoppelten Ausgängen umfasst.

3. Vorrichtung nach einem der Ansprüche 1 und 2, **dadurch gekennzeichnet, dass** sie mindestens ein zweites zusätzliches Fusionsmodul (MFA21) mit über optische Wegstrecken an Ausgänge der besagten Übertragungsmodule (MD2j) der besagten zweiten Schaltmatrix gekoppelten Eingängen und einem Ausgang, wobei die besagten Eingänge des besagten zweiten zusätzlichen Fusionsmoduls (MFA21) oder die Ausgänge der Übertragungsmodule, welche an die besagten Eingänge gekoppelt sind, für die Regulierung der optischen Leistung ausgelegt sind,
dass die Fusionsmodule (MF1j) der ersten Schaltmatrix (MC1) jeweils mindestens einen zusätzlichen Eingang aufweisen,
und dass sie mindestens eine optische Wegstrecke (LS3) umfasst, welche den Ausgang des besagten zweiten zusätzlichen Fusionsmoduls (MFA21) an die besagten zusätzlichen Eingänge der Fusionsmodule (MF1j) der ersten Schaltmatrix (MC1) koppelt.

4. Vorrichtung nach Anspruch 3, **dadurch gekennzeichnet, dass** sie mindestens ein zweites zusätzliches Übertragungsmodul (MDA11) mit einem Eingang, welcher derart an eine optische Wegstrecke (LS3) angeschlossen ist, dass er an den Ausgang des besagten zweiten zusätzlichen Fusionsmoduls (MFA21) gekoppelt wird, und mit Ausgängen, welche an die besagten zusätzlichen Eingänge der Fusionsmodule (MF1j) der ersten Schaltmatrix (MC1) gekoppelt werden.

5. Vorrichtung nach Anspruch 4, **dadurch gekennzeichnet, dass** eine jede der besagten Schaltmatrixen mindestens zwei zusätzliche Übertragungsmodule (MDAik) und mindestens zwei zusätzliche Fusionsmodule (MFAik) umfasst, und dass sie mindestens vier optische Wegstrecken (LSn) umfasst, welche jeweils den Ausgang eines der besagten zusätzlichen Fusionsmodule (MFAik) einer der besagten Schaltmatrixen (MCi) an den Eingang eines der besagten zusätzlichen Übertragungsmodule (MDAi'k) der anderen Schaltmatrix (MCi') koppeln.

6. Vorrichtung nach einem der Ansprüche 1 bis 5. **dadurch gekennzeichnet, dass** mindestens eine der besagten optischen Wegstrecken (LSn) mit einem Verstärkungsmittel (An) ausgestattet ist.

7. Vorrichtung nach einem der Ansprüche 1 bis 6, **dadurch gekennzeichnet, dass** die besagten Übertragungsmodule (MDij) und jedes zusätzliche Übertragungsmodul (MDAik) in einer Gruppe, welche die optischen Koppler an mindestens einen Eingang und mehrere Ausgänge und die Wellenlängenauswahlmodule umfasst, gewählt werden.

8. Vorrichtung nach einem der Ansprüche 1 bis 7, **dadurch gekennzeichnet, dass** die besagten Fusionsmodule (MFij) und jedes zusätzliche Fusionsmodul (MFAik) Wellenlängenauswahlmodule sind,

9. Vorrichtung nach einem der Ansprüche 1 bis 8, **dadurch gekennzeichnet, dass** die besagten Fusionsmodule (MFij) und jedes zusätzliche Fusionsmodul (MFAik) in einer Gruppe, welche mindestens die optischen Koppler an mindestens einen Ausgang und mehrere Eingänge und die Wellenlängenauswahlmodule umfasst, gewählt werden.

10. Vorrichtung nach einem der Ansprüche 1 bis 9. **dadurch gekennzeichnet, dass** die besagten Übertragungsmodule (MDij) und jedes zusätzliche Übertragungsmodul (MDAik) Wellenlängenauswahlmodule sind.

11. Vorrichtung nach einem der Ansprüche 7 bis 10, **dadurch gekennzeichnet, dass** die besagten Wellenlängenauswahlmodule (MDij; MFij) vom sogenannten "WSS"-Typ sind.

12. Schaltknoten (NC), angeordnet in der Form eines transparenten optischen Kreuzschienenverbinders für ein optisches Netzwerk mit Wellenlängenmultiplex, **dadurch gekennzeichnet, dass** er mindestens eine optische Schaltvorrichtung (D) gemäß einem der vorstehenden Ansprüche umfasst.
